# EUROPEAN PATENT APPLICATION

(11) **EP 4 745 705 A1**
(43) Date of publication of application: **20.05.2026**
(21) Application number: 24832212.5
(22) Date of filing: 29.04.2024
(51) Int. Cl.: G05D 1/80, G05D 1/617, G05D 1/48, G05D 1/46, G05D 1/243, H04N 23/20, G01S 19/20, B64C 39/02, B64U 101/30

(54) **AUTONOMOUS FLIGHT METHOD USING VISUAL NAVIGATION IN EVENT OF GNSS ANOMALY**

(30) Priority: 29.06.2023 KR 20230084379
(71) Applicant: NES&TEC Co., Ltd., Daejeon 34036 (KR)
(72) Inventor: LEE, Ki Seong, Daejeon 34021 (KR)
(74) Representative: dompatent
(86) International application number: PCT/KR2024/005740
(87) International publication number: WO 2025/005427

(57) **Abstract**

Proposed is a method in which a drone transitions to fly via visual navigation in a situation where a GNSS signal is unavailable, and zoom control of a camera is performed according to an altitude, and a compensation coefficient according to a zoom magnification is applied to optical flow calculation for visual navigation, thereby achieving autonomous flight through accurate determination of a direction and accurate calculation of a velocity.

## Description

### Technical Field

The present disclosure relates to a method for enabling autonomous flight of a drone in a situation where a GNSS signal is unavailable. More particularly, the present disclosure relates to a method in which a drone transitions to fly via visual navigation in a situation where a GNSS signal is unavailable, and zoom control of a camera is performed according to an altitude, and a compensation coefficient according to a zoom magnification is applied to optical flow calculation for visual navigation, thereby achieving autonomous flight through accurate determination of a direction and accurate calculation of a velocity.

### Background Art

Generally, most drones are provided with a GNSS module, such as a GPS receiver, and are capable of performing precise flight while minimizing positioning errors by using real-time location information determinable through the GNSS module.

Accordingly, in situations where a failure occurs in the GNSS module or external radio interference is attempted to jam satellite signals, the location information becomes unavailable, making it inevitably difficult to perform precise flight of the drone.

For this reason, there is a need for a means to protect drones used for performing specific missions, such as reconnaissance or photography, in anomalous situations, such as radio jamming. In response to such needs, inventions have been proposed and disclosed, such as Korean Patent Application Publication No. 10-2020-0016432, titled "HACKING RESPONSE SYSTEM FOR UNMANNED AERIAL VEHICLE", and Korean Patent Application Publication No. 10-2022-0014179, titled "AUTONOMOUS FLIGHT DEVICE FOR RESPONDING IN SITUATION WHERE GPS SIGNAL RECEPTION IS IMPOSSIBLE".

That is, Korean Patent Application Publication No. 10-2020-0016432, titled "HACKING RESPONSE SYSTEM FOR UNMANNED AERIAL VEHICLE", discloses an invention that relates to a hacking response system configured to respond to spoofing-type hacking attempts by analyzing GPS signals received in real time to detect and remove fake signals, and to respond to jamming-type hacking attempts by enabling flight along a preset flight path when reception of all signals is blocked.

In addition, Korean Patent Application Publication No. 10-2022-0014179, titled "AUTONOMOUS FLIGHT DEVICE FOR RESPONDING IN SITUATION WHERE GPS SIGNAL RECEPTION IS IMPOSSIBLE", discloses an invention that relates to an autonomous flight device configured to enable an unmanned aerial vehicle to safely perform autonomous flight toward and land at a safe zone by performing calculations based on the last-collected location information, coordinate information for each of a plurality of preset safe zones, and a heading value of the unmanned aerial vehicle, in the event of interference in GPS signal reception.

As such, it can be expected that by utilizing the above-described inventions in the related art, it is possible to respond effectively enough to prevent a crash or capture of a drone in anomalous situations, such as radio jamming, that may occur during the drone's flight.

However, the above-described inventions in the related art merely present general concepts for responding to anomalous situations, such as radio jamming, and possess structural limitations in that the above-described inventions virtually fail to propose specific methods for precisely flying a drone to an original destination or a safe location without satellite signals.

That is, the above-described inventions in the related art are insufficient for achieving full technical implementation for preventing a crash or capture of a drone in anomalous situations. For these reasons, there is a demand for a new invention that proposes a method for precisely flying a drone to an original destination or a safe location without satellite signals.

### Disclosure

### Technical Problem

Since the above-described inventions merely propose general concepts for responding to anomalous situations, such as radio jamming that may occur during a drone's flight, and possess structural limitations in that the above-described inventions virtually fail to propose specific methods for precisely flying a drone to an original destination or a safe location without satellite signals, the present disclosure is directed to providing a solution to this problem.

To elaborate, in an anomalous situation such as radio jamming that may occur during a drone's flight, flight only through inertial navigation, which is traditional navigation, leads to a limitation where the problem of continuous error accumulation cannot be resolved.

Furthermore, an image matching technique utilizing a satellite map is unable to respond to changes in ground conditions occurring over time relative to the time point of capturing the satellite map, and has a limitation in that the technique cannot be utilized in vast areas lacking distinct patterns, such as deserts.

Accordingly, since conventional methods including the above-described inventions lack appropriate countermeasures for anomalous situations such as radio jamming, the present disclosure is directed to providing a solution to this problem.

### Technical Solution

To achieve the above-mentioned objective, the present disclosure proposes
an autonomous flight method using visual navigation in a GNSS anomaly situation, the method including: an anomaly detection step of detecting an anomaly in a GNSS provided at a drone; a capturing step of, when the anomaly in the GNSS is detected, adjusting a capturing direction of a camera provided at the drone to a vertically downward direction and capturing a real-time image; an altitude determination step of, when the anomaly in the GNSS is detected, determining a current flight altitude by using a sensor provided at the drone; a zoom control step of controlling zoom of the camera according to the determined flight altitude; a calculation step of determining a flight direction of the drone by tracking displacement of pixels in the image through an optical flow method while zoom of the camera is controlled and, simultaneously, calculating a flight velocity of the drone by incorporating the current flight altitude and a current zoom magnification; and a flight control step of controlling flight of the drone through an inertial navigation method by using the flight direction and the flight velocity of the drone determined and calculated in the calculation step.

Herein, in the present disclosure, sunrise and sunset times for a day of flight may be calculated immediately upon detection of the anomaly in the GNSS, and a current time point may be classified as daytime or nighttime on the basis of the calculated sunrise and sunset times, and at nighttime, a real-time thermal image used in the calculation step may be captured by independently adjusting a capturing direction of a thermal imaging camera provided at the drone to a vertically downward direction.

Furthermore, in the present disclosure, a compensation coefficient according to the flight altitude of the drone and the current zoom magnification may be applied to optical flow calculation using a previously input compensation formula, thereby removing or minimizing occurrence of a calculation value error according to the flight altitude of the drone.

### Advantageous Effects

An autonomous flight method using visual navigation in a GNSS anomaly situation according to the present disclosure
is configured such that a drone transitions to fly via visual navigation in a situation where a GNSS signal is unavailable, and zoom control of a camera is performed according to an altitude, and a compensation coefficient according to a zoom magnification is applied to optical flow calculation for visual navigation, thereby achieving autonomous flight through accurate determination of a direction and accurate calculation of a velocity.

Furthermore, according to the present disclosure, a time point at which a GNSS signal is unavailable is determined by being classified as daytime or nighttime, and a digital camera is used during daytime and a thermal imaging camera is used at nighttime, so that autonomous flight via visual navigation at nighttime can be achieved without problems.

### Description of Drawings

FIG. 1 is a basic flowchart of an autonomous flight method using visual navigation in a GNSS anomaly situation according to the present disclosure.
FIG. 2 is a flowchart illustrating a process of classifying a current time point for selecting a capturing camera in a capturing step included in the present disclosure.
FIG. 3 is a flowchart illustrating a process of generating a zoom control signal in an altitude determination step included in the present disclosure.
FIG. 4 is a flowchart illustrating a process of a calculation step and a flight control step included in the present disclosure.

### Best Mode

According to the present disclosure, an autonomous flight method using visual navigation in a GNSS anomaly situation includes:
an anomaly detection step of detecting an anomaly in a GNSS provided at a drone; a capturing step of, when the anomaly in the GNSS is detected, adjusting a capturing direction of a camera provided at the drone to a vertically downward direction and capturing a real-time image; an altitude determination step of, when the anomaly in the GNSS is detected, determining a current flight altitude by using a sensor provided at the drone; a zoom control step of controlling zoom of the camera according to the determined flight altitude; a calculation step of determining a flight direction of the drone by tracking displacement of pixels in the image through an optical flow method while zoom of the camera is controlled and, simultaneously, calculating a flight velocity of the drone by incorporating the current flight altitude and a current zoom magnification; and a flight control step of controlling flight of the drone through an inertial navigation method by using the flight direction and the flight velocity of the drone determined and calculated in the calculation step.

### Mode for Invention

The present disclosure relates to a method for enabling autonomous flight of a drone in a situation where a GNSS signal is unavailable,
an anomaly detection step S100 of detecting an anomaly in a GNSS provided at a drone; a capturing step S110 of, when the anomaly in the GNSS is detected, adjusting a capturing direction of a camera provided at the drone to a vertically downward direction and capturing a real-time image; an altitude determination step S120 of, when the anomaly in the GNSS is detected, determining a current flight altitude by using a sensor provided at the drone; a zoom control step S130 of controlling zoom of the camera according to the determined flight altitude; a calculation step S140 of determining a flight direction of the drone by tracking displacement of pixels in the image through an optical flow method while zoom of the camera is controlled and, simultaneously, calculating a flight velocity of the drone by incorporating the current flight altitude and a current zoom magnification; and a flight control step S150 of controlling flight of the drone through an inertial navigation method by using the flight direction and the flight velocity of the drone determined and calculated in the calculation step S140.

Hereinafter, embodiments of the present disclosure will be described in detail with reference to the accompanying drawings.

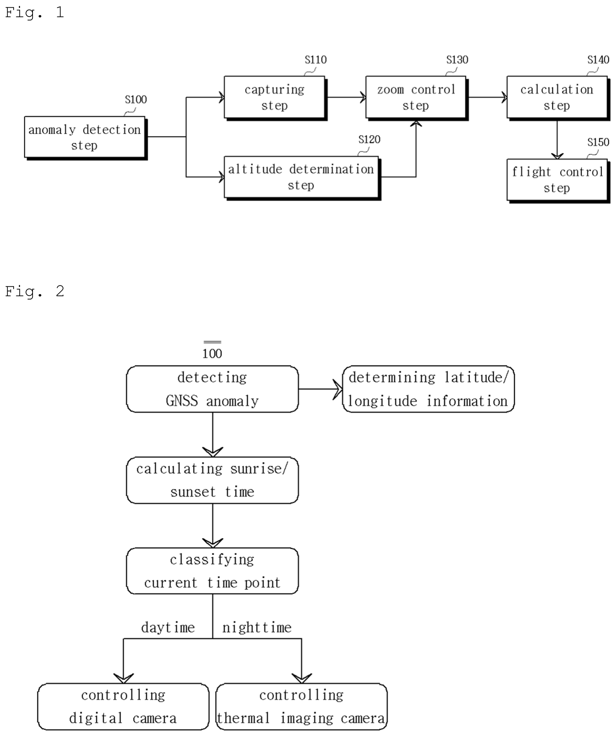

First, as shown in FIG. 1, the anomaly detection step S100 is a step that commences autonomous flight control based on visual navigation proposed in the present disclosure, and is based on a time point at which an anomaly in a GNSS provided at a drone having multiple rotary wings is detected.

That is, a drone that may be used for performing missions, such as photography, is provided with a global navigation satellite system (GNSS) module, such as a GPS receiver, for receiving satellite signals. In the anomaly detection step S100, an anomaly in the GNSS module itself or an anomaly in a satellite signal received by the GNSS module is detected and a response procedure therefor is initiated.

Accordingly, an analysis device 100 or an analysis system for detecting an anomaly in the GNSS module itself or an anomaly in a satellite signal received by the GNSS module needs to be provided in the body of the drone or a ground control device, and preferably remains active throughout the duration of the drone's flight.

In addition, it is preferable that the analysis device 100 or the analysis system is configured to detect a spoofing attempt as well as a jamming attempt against the drone. As a method of detecting spoofing, methods such as monitoring the sensitivity of a satellite signal, analyzing the quality of a satellite signal, and detecting frequency interference may be used. However, any other methods may be used without limitation as long as they are effective for detection.

In addition, the analysis device 100 or the analysis system needs to generate an emergency control signal for response immediately upon detecting a spoofing or jamming attempt against the drone, and needs to transmit the generated control signal to a controller 110 provided in the body of the drone or a controller 110 provided in the ground control device.

Herein, the controller 110 may be a device that independently controls a camera, or a multi-functional device capable of controlling the flight of the drone while simultaneously controlling a camera provided at the drone. Immediately upon receiving the emergency control signal, the controller needs to control the camera independently or control both the drone and the camera simultaneously, taking priority over other signals.

In addition, as shown in FIG. 1, the capturing step S110 is a step performed immediately after an anomaly in the GNSS is detected, and involves adjusting a capturing direction of the camera provided at the drone to a vertically downward direction and capturing a real-time image, thereby securing real-time image information, which serves as a basis for visual navigation.

That is, when an anomaly in the GNSS is detected while the drone is in flight without image capturing, the controller 110 switches the camera to a capturing mode upon receiving an emergency control signal, and simultaneously, maintains or adjusts the capturing direction to a vertically downward direction so that a real-time image is captured.

In addition, when an anomaly in the GNSS is detected while the drone is in flight with image capturing, the controller 110 maintains or adjusts the capturing direction of the camera to a vertically downward direction upon receiving an emergency control signal so that a real-time image is captured.

Herein, the emergency control signal received by the controller 110 needs to take priority over other control signals, so image capturing based on a previous control signal needs to be immediately halted.

Accordingly, in the capturing step S110, an image of the area vertically below the drone in flight may be captured in real time, and image information thereof is generated and transmitted to a designated device immediately upon generation, whereby the image information may be used in subsequent steps for determining a flight direction of the drone and calculating a flight velocity of the drone.

However, the above-described configuration is useful only during the daytime when clear images can be captured to an extent that terrain features below the drone can be clearly identified using a general digital camera. Consequently, it is difficult or impossible to use image information generated at nighttime when capturing clear images is difficult or impossible, in the process of determining the flight direction of the drone and calculating the flight velocity.

As a solution to the above-described problem, according to the present disclosure, when an anomaly in the GNSS is detected, a current time point is classified as either daytime or nighttime on the basis of the sunrise and sunset times for the day on which the drone is flying, and when the classified current time point is nighttime, a thermal imaging camera is used for capturing images.

To this end, the drone needs to be provided with a digital camera capable of capturing general images along with a gimbal as well as a thermal imaging camera capable of capturing thermal images along with a gimbal, and the two types of the provided cameras may be controlled simultaneously or selectively by the controller 110.

More specifically, as shown in FIG. 2, the analysis device 100 or the analysis system may calculate the sunrise and sunset times for the day according to the date and time of the time point at which an anomaly in the GNSS provided at the drone is detected or a jamming attempt against the drone is detected, and may classify the current time point as daytime or nighttime on the basis of the calculated sunrise and sunset times.

Herein, to calculate the sunrise and sunset times, it is necessary to be aware of the date and time of the current time point determinable through the analysis device 100 or the analysis system as well as the current latitude and longitude based on the drone.

Herein, as a method of determining the current latitude and longitude, utilizing latitude information and longitude information determined through the GNSS module immediately before an anomaly is detected in the anomaly detection step S100 may be used, but there is no limitation thereto.

In addition, the sunrise and sunset times for the day on which the drone is flying may be calculated using the following code previously input to the analysis device 100 or the analysis system. (The code described in Table 1 below is an exemplary code for calculating sunrise and sunset times. The code may be used as it is, or it may also be used with partial modifications or additional commands as necessary.)

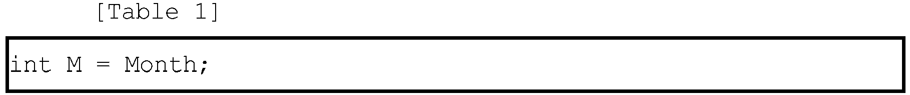

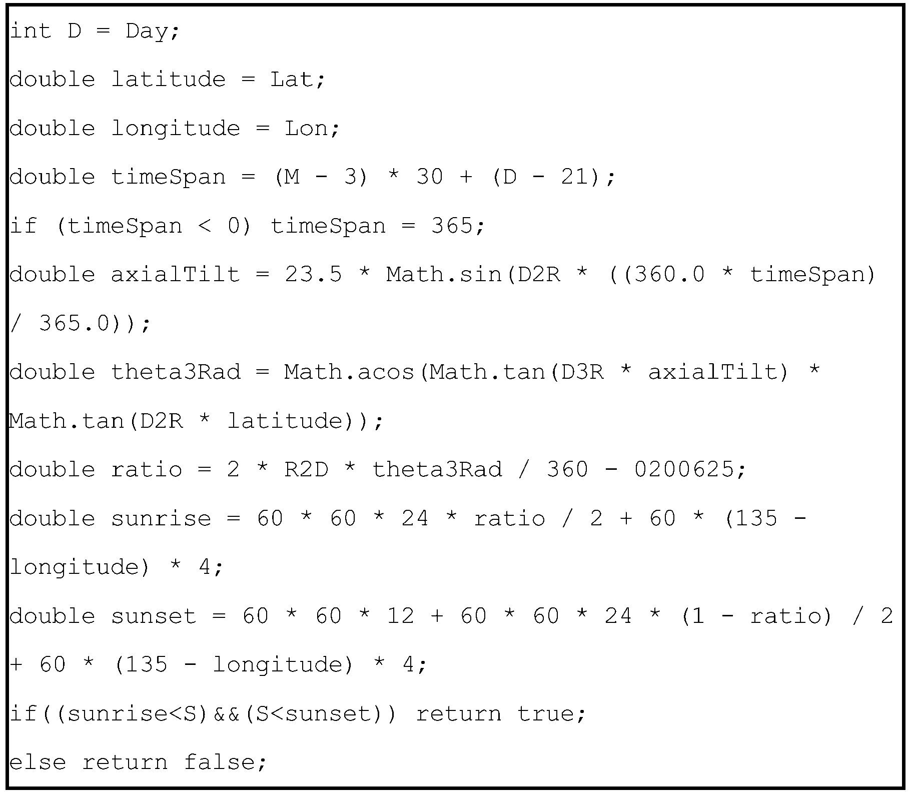

Subsequently, when the current time point determined as a result of calculation is daytime, a control signal for the digital camera provided at the drone is generated and transmitted to the controller 110 so that adjustment of the camera to a vertically downward direction and capturing of an image of the area vertically below the camera are performed simultaneously.

However, when the current time point determined as a result of calculation is nighttime, a control signal for the thermal imaging camera provided at the drone is generated and transmitted to the controller 110 so that adjustment of the thermal imaging camera to a vertically downward direction and capturing of a thermal image of the area vertically below the thermal imaging camera are performed simultaneously.

In this process, since image capturing using the digital camera does not need to be halted, two types of image information may be generated simultaneously. However, the image information generated by the digital camera is not intended for calculating the flight velocity of the drone, only the real-time thermal image may be used in the subsequent calculation step S140.

Consequently, when the capturing step S110 is performed at nighttime, a thermal image of the area vertically below the drone in flight may be captured in real time, and image information thereof is generated and transmitted to a designated device, whereby the image information may be used in subsequent steps for determining the flight direction of the drone and calculating the flight velocity.

In addition, as shown in FIG. 1, the altitude determination step S120 is also a step performed immediately after an anomaly in the GNSS is detected, and involves determining the altitude of the actual flight position relative to the ground rather than an above ground level (AGL) relative to the takeoff point, by using digital terrain elevation data (DTED) or LiDAR.

Accordingly, a radio altimeter, a barometric sensor, or a LiDAR provided in the drone may continuously generate measurement information, or may generate measurement information from a time point at which an anomaly in the GNSS is detected or a time point at which a jamming attempt is detected. The generated measurement information may be provided to the analysis device 100 provided in the drone or the analysis device 100 provided in the ground control device, and may be used in a process of generating a control signal for zoom control of the camera.

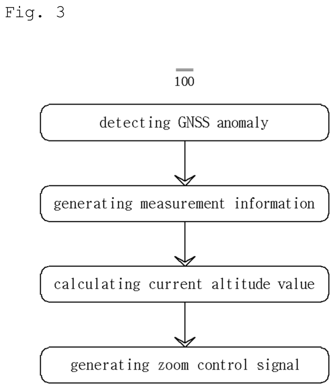

That is, as shown in FIG. 3, the analysis device 100 or the analysis system may calculate a current altitude value by applying distance information or atmospheric pressure numerical value information included in the measurement information to previously input DTED or by using LiDAR, and may generate a zoom control signal for zoom control of the digital camera or the thermal imaging camera on the basis of the altitude value.

In addition, the zoom control step S130 shown in FIG. 1 is a step that is performed immediately after a zoom control signal for zoom control of the camera is generated or includes a process of generating the zoom control signal, and enables more accurate image analysis for visual navigation by controlling zoom of the camera according to the determined flight altitude.

That is, to implement visual navigation, an image analysis using an optical flow method, which tracks displacement of pixels in an image captured by the camera, needs to be involved. However, such optical flow-based image analysis has a problem in that the accuracy of the analysis decreases because as the altitude of the drone increases, resolution and precision of the image decreases, or a problem in that analysis data usable for visual navigation is not generated.

According to the present disclosure, the controller 110 performs zoom control of the camera according to the flight altitude of the drone on the basis of a zoom control signal generated by the analysis device 100 or the analysis system. Accordingly, the optical flow-based image analysis may be accurately performed even when the drone is flying at a high altitude of 100 m or more.

According to an embodiment of the present disclosure regarding the zoom control step S130, the analysis device 100 or the analysis system may generate a zoom control signal that causes the camera to zoom out to the maximum extent at an altitude of 15 m or less, based on a preset maximum altitude of 150 m, and may generate a zoom control signal that causes the camera to zoom in by 10 % relative to the maximum value at an altitude exceeding 15 m and equal to or less than 30 m, and may generate a zoom control signal that causes the camera to zoom in to the maximum extent at an altitude exceeding 135 m and equal to or less than 150 m, by maintaining the same manner.

Herein, the maximum altitude in the above-described embodiment depends on the performance of the camera provided at the drone and is not a fixed value, so different maximum altitudes may be applied depending on the product.

In addition, as shown in FIG. 1, the calculation step S140 is a step performed immediately after zoom control of the camera by the controller 110 is performed, and may enable more accurate image analysis for visual navigation of the drone to be performed through the optical flow method.

That is, in the calculation step S140, the analysis device 100 or the analysis system determines the flight direction of the drone by tracking displacement of the pixels in the image through the optical flow method while the camera zoom is controlled, and simultaneously calculates the flight velocity of the drone by incorporating the current flight altitude and zoom magnification.

However, in the zoom control step S130, a zoom control signal is generated on the basis of only the altitude of the drone, so a significant discrepancy occurs between the velocity value determined through the optical flow method and the actual velocity of the drone.

This is because non-linear field-of-view (FOV) variation values in the process in which the camera zooms in or out in the zoom control step are formed.

That is, when FOV variation values for any one product among digital cameras were examined, it was found that the FOV value in a maximum zoom-out state was 58.92695°, the FOV value in a 10 % zoom-in state relative to the maximum value was 51.74155°, the FOV value in a 20 % zoom-in state was 44.09145°, the FOV value in a 30 % zoom-in state was 38.06503°, the FOV value in a 40% zoom-in state was 32.60511°, the FOV value in a 50 % zoom-in state was 26.98874°, the FOV value in a 60 % zoom-in state was 21.23717°, the FOV value in a 70 % zoom-in state was 16.49911°, the FOV value in a 80 % zoom-in state was 13.4017°, the FOV value in a 90 % zoom-in state was 10.28449°, and the FOV value in a maximum zoom-in state was 7.437238°.

Since the non-linear field-of-view (FOV) variation values of the camera provided at the drone are formed, the optical flow-based image analysis that simply reflects the current flight altitude and zoom magnification is inevitably inaccurate.

Accordingly, it is preferable that a compensation coefficient is incorporated into a compensation formula previously input to the analysis device 100 or the analysis system to derive an accurate calculation value through image analysis. When a zoom control signal to which the compensation formula is applied is generated, the velocity value determined through the optical flow method may substantially coincide with or be identical to the actual velocity of the drone.

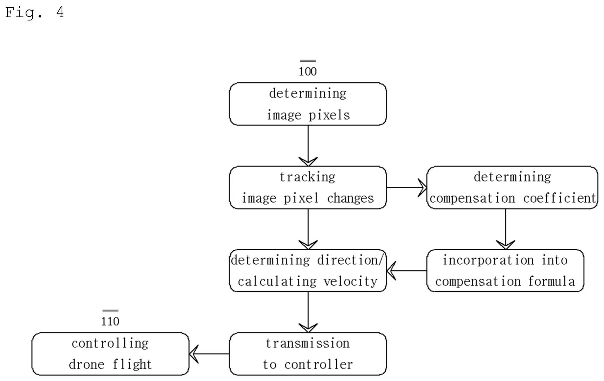

That is, as shown in FIG. 4, in the calculation step S140, the compensation coefficient according to the current flight altitude of the drone and the zoom magnification is applied to the optical flow calculation using the previously input compensation formula, thereby removing or minimizing the occurrence of a calculation value error according to the flight altitude of the drone.

In the meantime, when the drone is flying at the maximum altitude or more, only the altitude changes while the camera provided at the drone is in the maximum zoom-in state. This is a linear variable, so optical flow calculation may be performed by dynamically incorporating only the current altitude to the fixed zoom magnification value.

In addition, as shown in FIG. 1, the flight control step S150 is a step performed immediately after image analysis based on the optical flow method is performed, and enables the implementation of inertial navigation based on the flight direction and velocity of the drone determined and calculated through image analysis.

That is, in the flight control step S150, the controller 110 controls the flight of the drone through the inertial navigation method using direction data and velocity data, which are analysis data generated by the analysis device 100 or the analysis system.

Accordingly, the drone is capable of continuing to fly along an original flight route or a new flight route even in a situation where an anomaly in the GNSS module is detected, a situation where a spoofing attempt occurs and an anomaly in a satellite signal received by the GNSS module is detected, or a situation where a jamming attempt against the drone is detected.

Subsequently, except the situation where an anomaly occurs in the GNSS module, when the drone moves out of the range where spoofing or jamming is attempted, a GNSS signal may be normally received again. In this case, the flight control method of the drone may be switched back to the original method using a GNSS signal.

The embodiments described above are provided by way of example so that the technical idea of the present disclosure may be fully conveyed to those skilled in the art to which the present disclosure pertains. The present disclosure is not limited to the embodiments described above and may be embodied in various other forms.

In addition, the same reference numerals refer to the same elements throughout the specification.

### Industrial Applicability

An autonomous flight method using visual navigation in a GNSS anomaly situation according to the present disclosure
provides the effects of achieving autonomous flight through accurate determination of a direction and accurate calculation of a velocity in a situation where a GNSS signal is unavailable for a drone, and achieving autonomous flight via visual navigation at nighttime without problems. Therefore, the present disclosure is industrially applicable.

## Claims

1. An autonomous flight method using visual navigation in a GNSS anomaly situation, the autonomous flight method comprising:
an anomaly detection step (S100) of detecting an anomaly in a GNSS provided at a drone;
a capturing step (S110) of, when the anomaly in the GNSS is detected, adjusting a capturing direction of a camera provided at the drone to a vertically downward direction and capturing a real-time image;
an altitude determination step (S120) of, when the anomaly in the GNSS is detected, determining a current flight altitude by using a sensor provided at the drone;
a zoom control step (S130) of controlling zoom of the camera according to the determined flight altitude;
a calculation step (S140) of determining a flight direction of the drone by tracking displacement of pixels in the image through an optical flow method while zoom of the camera is controlled and, simultaneously, calculating a flight velocity of the drone by incorporating the current flight altitude and a current zoom magnification; and
a flight control step (S150) of controlling flight of the drone through an inertial navigation method by using the flight direction and the flight velocity of the drone determined and calculated in the calculation step (S140).

2. The autonomous flight method of claim 1, wherein when the anomaly in the GNSS is detected,
sunrise and sunset times for a day of flight are calculated, and
a current time point is classified as daytime or nighttime on the basis of the calculated sunrise and sunset times, and
at nighttime, a real-time thermal image used in the calculation step (S140) is captured by independently adjusting a capturing direction of a thermal imaging camera provided at the drone to a vertically downward direction in the capturing step (S110).

3. The autonomous flight method of claim 1, wherein in the calculation step (S140), a compensation coefficient according to the flight altitude of the drone and the current zoom magnification is applied to optical flow calculation using a previously input compensation formula, thereby removing or minimizing occurrence of a calculation value error according to the flight altitude of the drone.
